# EUROPEAN PATENT SPECIFICATION

(11) **EP 4 043 725 B1**
(45) Date of publication and mention of the grant of the patent: **20.11.2024**
(21) Application number: 20882050.6
(22) Date of filing: 09.06.2020
(51) Int. Cl.: F03D 80/60

(54) **AIR COOLING SYSYTEM, WIND TURBINE GENERATOR UNIT AND COOLING METHOD THEREFOR**
LUFTKÜHLSYSTEM, WINDTURBINENGENERATOREINHEIT UND KÜHLVERFAHREN DAFÜR
SYSTÈME DE REFROIDISSEMENT D'AIR, UNITÉ DE GÉNÉRATEUR ÉOLIEN ET SON PROCÉDÉ DE REFROIDISSEMENT

(30) Priority: 01.11.2019 CN 201911060126
(43) Date of publication of application: 17.08.2022
(73) Proprietor: Goldwind Science & Technology Co., Ltd., Urumqi, Xinjiang 830026 (CN)
(72) Inventor: BAI, Luolin, Beijing 100176 (CN); FANG, Tao, Beijing 100176 (CN); SØRENSEN, Peter Hessellund, Beijing 100176 (CN)
(74) Representative: Vossius & Partner Patentanwälte Rechtsanwälte mbB
(86) International application number: PCT/CN2020/095063
(87) International publication number: WO 2021/082455

(56) References cited:
- EP-A1- 3 279 469
- EP-A1- 3 482 815
- EP-A1- 3 485 163
- EP-A1- 4 043 726
- EP-A2- 2 565 446
- CN-A- 105 736 258
- CN-A- 105 736 258
- CN-A- 107 153 438
- CN-A- 108 088 001
- CN-A- 108 266 337
- CN-A- 108 894 934
- CN-A- 108 894 934
- CN-A- 109 642 553
- CN-A- 109 642 553
- CN-A- 110 725 779
- CN-Y- 2 865 833

## Description

### TECHNICAL FIELD

The present disclosure relates to a technical field of cooling, and specifically relates to an air cooling system, a wind turbine generator unit and a cooling method thereof.

### BACKGROUND

Wind power generation is one of the renewable energy technologies closest to commercialization and is the focus of renewable energy development. The motor in the wind turbine suffers from heat loss during operation, which mainly includes: an electromagnetic loss, that is, the Joule heat generated by Ohmic impedance in the winding, also referred as a copper loss; a hysteresis loss and an eddy current loss in the iron core and the like, also referred as an iron loss; and inevitable stray loss; in the case of a permanent magnet motor, the heat loss further includes a loss of magnetic steel. These losses cause the motor to release a large amount of heat during operation, and the heat will not only cause a certain impact on the motor itself and its insulation structure, resulting in shortened insulation life or even insulation failure, but also lead to the continuous decline of the output power of the motor.

With the rapid development of offshore wind turbine generator, the capacity of one single unit continues to increase, directly resulting in that the loss of the wind turbine generator continuously increases and a cooling system of the motor will occupy a larger space in a nacelle. For the working conditions of large wind and sand or harsh environment, especially for the offshore salt spray environment, the requirements for the design of the cooling system are stricter.
EP3485163A1 discloses an arrangement for cooling a generator mounted in a nacelle of a wind turbine, the arrangement includes: a cooling air inlet at an outer wall of the nacelle for introducing cooling air into a space region inside the nacelle; an inlet fan downstream the cooling air inlet configured to pressurize the introduced cooling air within the space region; a filter system downstream the inlet fan and separating the space region from another space region inside the nacelle, the other space region being in communication with generator portions to be cooled; and a duct system adapted to guide a portion of cooling air heated by exchange of heat from the generator portions to the cooling air into the space region.
CN108894934A discloses a device with a dehumidification structure. The device includes a device body and a dehumidification rotation wheel. The device body is provided with an area which needs to keep dry; the dehumidification rotation wheel is arranged on a rotatable component of the device body and includes a processing area and a regeneration area; air is dehumidified through the processing area, then enters the area which needs to keep dry, is heated and dried, and enters the regeneration area, the regeneration area is subjected to moisture absorption, and the moisture is discharged out of the dehumidification rotation wheel.
CN105736258A provides a multiphase flow separating device and a fluid transport device with the multiphase flow separating device, so that clean and dry gas phase media are formed in a separated manner and used for the fluid transport device. The multiphase flow separating device includes a first separator and a second separator. An air inlet of the first separator is used for introducing upwind incoming flow, and an air outlet of the first separator communicates with an air inlet of the second separator. The first separator and the second separator are used for carrying out multiphase flow separation on the upwind incoming flow, and the separation precision of the first separator is smaller than that of the second separator. The air outlet of the second separator is used for outputting the gas phase media formed after separation.
EP3482815A1 provides a method for removing moisture from a cooling air filter installed for filtering first cooling air for cooling a generator from a first end, where the method includes: pressurizing second cooling air cooling the generator from a second end; and allowing the second cooling air having received heat from the generator to pass through the cooling air filter, so as to absorb and thereby reduce moisture from the cooling air filter.

### SUMMARY

Embodiments of the present disclosure provides an air cooling system, a wind turbine generator and a cooling method thereof, and the air cooling system can solve issues of dehumidification and cooling of the wind turbine generator at the same time.

On one aspect, the present application provides an air cooling system applied to a wind turbine generator, and the air cooling system includes: a first dehumidification system, disposed on a wall of a nacelle of the wind turbine generator and in communication with the nacelle; a second dehumidification system, disposed in the nacelle and dividing an interior space of the nacelle into a first cavity and a second cavity, the second cavity being communicated with an air outlet of a generator of the wind turbine generator; and a driving device, located in the first cavity, wherein under the action of the driving device, external air passes through the first dehumidification system and then is mixed with high-temperature air discharged from the air outlet of the generator, and the mixed air enters the first cavity, passes through the second dehumidification system and then enters the second cavity, and exchanges heat with heat-generating components in the second cavity and/or the generator, where the air cooling system includes two or more subsystems that operate independently of each other, and each of the two or more subsystems is deiced by operating the two or more subsystems alternately for a predetermined time period.

On another aspect, the present application further provides a wind turbine generator, which includes a generator; a nacelle, connected to the generator; and any of the air cooling systems as described above, the air cooling system is arranged between the nacelle and the air inlet of the generator.

On a further aspect, the present application further provides a cooling method for the wind turbine generator as described above, wherein the cooling method includes steps of: driving external cooling air to pass through the first dehumidification system by the driving device and mix with the high-temperature air discharged from the air outlet of the generator; and making the mixed air to enter the first cavity of the nacelle, then pass through the second dehumidification system and enter the second cavity of the nacelle, and exchange heat with the heat-generating components in the second cavity and/or the generator, where the cooling method further includes: operating two or more subsystems alternately for a predetermined time period so as to deice each of the two or more subsystems.

The present application provides an air cooling system and a wind turbine generator, and by arranging the air cooling system between the nacelle of the wind turbine generator and the air inlet of the generator, which includes the first dehumidification system disposed on the wall of the nacelle and in communication with the nacelle and the second dehumidification system disposed in the nacelle, the issues of dehumidification and cooling of the wind turbine generator can be solved at the same time, with a simple and compact overall structure, a small occupied space, and being easy to maintain. Further, the cooling method for the wind turbine generator provided by the present application, can solve the issues of dehumidification and cooling of the wind turbine generator at the same time, by performing dehumidification of two stages on the external cooling air before the external cooling air exchanging heat with the heat-generating components in the nacelle and/or the generator.

### BRIEF DESCRIPTION OF THE DRAWINGS

The present application can be better understood from the following description of specific embodiments of the present application in combination with the accompanying drawings, wherein other features, objects and advantages of the present application will become apparent by reading the following detailed description of non-limiting embodiments with reference to the accompanying drawings, and the same or similar reference numbers refer to the same or similar features.
FIG. 1 is a schematic structural diagram of an air cooling system provided by an embodiment of the present application;
FIG. 2 is a schematic structural diagram of a dehumidification device in the air cooling system shown in FIG. 1;
FIG. 3 is a schematic structural diagram of a pipe layout in a nacelle of the air cooling system shown in FIG. 1;
FIG. 4 is a schematic structural diagram of another air cooling system provided by an embodiment of the present application;
FIG. 5 is a schematic structural diagram of a pipe layout in a nacelle of the air cooling system shown in FIG. 4;
FIG. 6 is a schematic structural diagram of another air cooling system provided by an embodiment of the present application;
FIG. 7 is a schematic structural diagram of another air cooling system provided by an embodiment of the present application;
FIG. 8 is a block flow diagram of a cooling method for a wind turbine generator according to an embodiment of the present application.

### Description of reference numbers:

M-generator; S-subsystem; C-nacelle; In-air inlet; O-air outlet; A-auxiliary air outlet; F-filter; A1-dehumidifying area; A2-moisture absorption area; C1-first cavity; C2-second cavity;
1-first pipe; 11-first end; 12-second end;
2-first dehumidification system;
3-driving device;
4-second dehumidification system; 41-isolation bracket; 42-dehumidification device; 421-rotatable wheel; 422-mositure absorption particle; 423-drive motor;
5-second pipe; 51-sub-pipe; 52-first circulation fan;
6-first regulating valve;
7-third pipe;
8-fourth pipe; 81-second circulation fan.

### DETAILED DESCRIPTION

Features and exemplary embodiments of various aspects of the present application are described in detail below. Numerous specific details are disclosed in the following detailed description to provide a thorough understanding of the present application. However, it will be apparent to the person skilled in the art that the present application may be practiced without some of these specific details. The following description of the embodiments is merely to provide a better understanding of the present application by illustrating examples of the present application. The present application is in no way limited to any specific configuration set forth below, but covers any modifications, substitutions and improvements of elements and components without departing from the inventive concept of the present application. In the drawings and the following description, well-known structures and techniques have not been shown in order to avoid unnecessarily obscuring the present application.

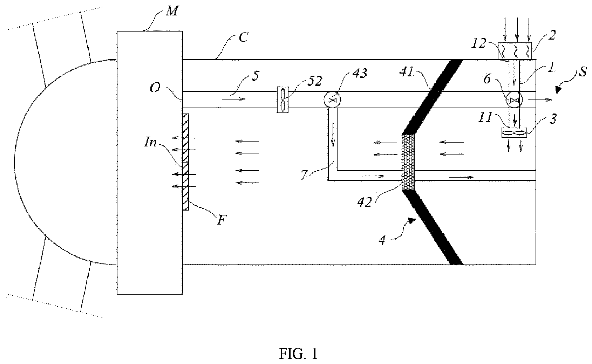

In order to better understand the present application, an air cooling system, a wind turbine generator and a cooling method of generator according to the embodiments of the present application are described below in detail with reference to FIGS. 1 to 8.

The ambient air outside of a nacelle C of a wind turbine generator generally has a certain relative humidity, especially for offshore wind turbine generator, the air is high-salt and high-humidity in the offshore environment, and most of salt and water exist in a form of droplet particles, the external cooling air at least needs to be dehumidified and, if necessary, desalted before entering the nacelle C.

Referring to FIG. 1, an embodiment of the present application provides an air cooling system, which is applied to a wind turbine generator, and the air cooling system includes: a first dehumidification system 2, a second dehumidification system 4 and a driving device 3.

The first dehumidification system 2 is disposed on a wall of the nacelle C of the wind turbine generator, and is communicated with the nacelle C. Optionally, the first dehumidification system 2 is a gas-liquid separation device, for separating out droplets in the external cooling air. The first dehumidification system 2 can be disposed on an inner wall of the nacelle C or an outer wall of the nacelle C, preferably on the outer wall of the nacelle C, so that all of the cooling air entering the nacelle C passes through the first dehumidification system 2, which does not occupy an interior space of the nacelle C.

The second dehumidification system 4 is disposed in the nacelle C and divides the interior space of the nacelle C into a first cavity C1 and a second cavity C2, and the second cavity C2 is communicated with an air outlet O of a generator M of the wind turbine generator.

The driving device 3 is disposed in the nacelle C to introduce the external cooling air into the nacelle C through the first dehumidification system 2. Due to the effect of inertia, most of the droplet particles with a diameter of greater than 12µm will hit blades of the wind turbine generator, and then flow out of the nacelle C; after removing the droplet particles with large diameter, humid air containing the remaining small amount of water and small amount of salt is introduced into the nacelle by the driving device 3 through the first dehumidification system 2, is mixed with part of high-temperature air discharged from the air outlet O of the generator M, passes through the second dehumidification system 4, and then exchanges heat with heat-generating components in the nacelle C and/or the generator M.

Optionally, the driving device 3 is a centrifugal fan, which includes a driving motor and a fan blade, and the fan blade rotates under the driving of the driving motor. The heat-generating components in the nacelle C include, but are not limited to, various electrical devices, gearboxes, and the like, which are determined according to the specific layout of the wind turbine generator.

Under the action of the driving device 3, after passing through the first dehumidification system 2, the external cooling air is mixed with the high-temperature air discharged from the air outlet O of the generator M, and the mixed air enters the first cavity C1, passes through the second dehumidification system 4, then enters the second cavity C2 and exchanges heat with the heat-generating components in the second cavity C2 and/or the generator M. Optionally, a flow of the high-temperature air discharged from the air outlet O of the generator M is adjusted, so that the mixed air in the first cavity C1 has a predetermined relative humidity.

The air cooling system adopts a manner of direct cooling by the external air, the cooling temperature is low, and thus the cooling effect of the wind turbine generator is improved. Since there is no risk of corrosion and leakage, the reliability is also higher than that of liquid cooling or air-liquid integrated cooling; meanwhile, complex components such as liquid cooling pipelines, pump stations, heat exchangers, and voltage stabilization systems are saved, with a compact structure, small occupied space, and a low manufacturing cost, and being easy to maintain.

By arranging an air cooling system between the nacelle C of the wind turbine generator and an air inlet In of the generator M, which includes a first dehumidification system 2 disposed on the wall of the nacelle C and in communication with the nacelle C and a second dehumidification system 4 disposed in the nacelle C, the air cooling system provided by the embodiments of the present application can solve the dehumidification and cooling issues of the wind turbine generator at the same time, and the entire structure is simple and compact, occupies a small space, and is easy to maintain.

The specific structure of the air cooling system provided by the embodiments of the present application will be described in further detail below with reference to the accompanying drawings.

Referring to FIG. 1 again, the air cooling system provided by the embodiments of the present application further includes: a first pipe 1 and a second pipe 5.

The first pipe 1 has a first end 11 located inside the nacelle C and a second end 12 located outside the nacelle C, the driving device 3 is disposed corresponding to the first end 11 of the first pipe 1, and the first dehumidification system 2 is disposed on the wall of the nacelle C corresponding to the second end 12 of the first pipe 1.

One end of the second pipe 5 is connected to the air outlet O of the generator M, and the other end is extended out of the nacelle C to communicate with the external cooling air after intersecting with the first pipe 1, so as to mix part of the high-temperature air discharged from the air outlet O of the generator M with the cooling air entering the first pipe 1.

Preferably, the driving device 3 is disposed at a downstream area of an intersection of the first pipe 1 and the second pipe 5, and by mixing of the external cooling air with the high-temperature exhaust gas (the temperature thereof can reach higher than 90 Celsius degrees) from the generator M, the temperature of the external cooling air is improved while the humidity of the external cooling air is decreased. Studies have shown that under certain relative humidity conditions, such as 74% relative humidity, salt can exist in the air in a form of liquid salt, and therefore, by controlling the relative humidity of the mixed gas to be lower than 74%, preferably lower than 60%, the liquid salt contained in the mixed air can be dried and solidified, and automatically precipitated.

By disposing the driving device 3 at the downstream area of the intersection of the first pipe 1 and the second pipe 5, the gas in the first pipe 1 and the second pipe 5 can be driven and fully mixed better, and the control of the relative humidity of the mixed air, the solidification and desalination can be realized; it can also prevent the salt in the external air from corroding the driving device 3 and entering the nacelle C and the generator M. Therefore, by making the mixed air to exchange heat with the heat-generating components in the nacelle C and/or the generator M, it can not only make full use of the high-temperature waste gas discharged from the generator M to reduce energy consumption, but also dehumidify and desalt the external cooling air, and further can directly cool the heat-generating components in the nacelle C and/or the generator M of the wind turbine generator.

Further, in order to make full use of the high-temperature waste gas discharged by the generator M and reduce energy consumption, the air cooling system further includes a first regulating valve 6, which is disposed at the intersection of the first pipe 1 and the second pipe 5, to adjust a flow of the high-temperature air entering the first pipe 1 from the second pipe 5.

The first regulating valve 6 is preferably a three-way valve, which is communicated with the first pipe 1, the second pipe 5 and the external air respectively. A part of the high-temperature air discharged from the air outlet O of the generator M to the second pipe 5 enters the first pipe 1 through the first regulating valve 6, and most of the remaining high-temperature air is discharged out of the nacelle C through the second pipe 5. After the high-temperature air entering the first pipe 1 is mixed with the air of high salt and high humidity, the temperature of the gas rises and a mixture of unstable saturated salt solution particles and air is generated; by controlling the relative humidity of the mixed gas to be lower than 74%, preferably lower than 60% by adjusting the first regulating valve 6, the mixture precipitates salt crystals in a crystallization form under the rotation of the driving device 3, and the salt crystals fall into a storage box (not shown in the figure) in the nacelle C, thereby improving the desalination and dehumidification effect to the external cooling air.

Optionally, the second pipe 5 is provided with a first circulation fan 52, to improve the mixing efficiency of the high-temperature air in the second pipe 5 with the humid air in the first pipe 1, thereby further improving the dehumidification effect to the external air.

The mixed gas after preliminary dehumidification and desalination by the first dehumidification system 2 enters the nacelle C through the first pipe 1 under the action of the driving device 3, and then is continuously dehumidified by the second dehumidification system 4, which can improve the overall dehumidification effect of the external air, reduce the structural complexity of the second dehumidification system 4 and reduces the occupied space of the nacelle C.

Specifically, the second dehumidification system 4 includes an isolation bracket 41, a dehumidification device 42 and a third pipe 7. The isolation bracket 41 is connected with the wall of the nacelle C, and tapers in a direction of an air flow in the first cavity C1. The dehumidification device 42 is disposed on the isolation bracket 41 and is located at a downstream end of the air flow. One end of the third pipe 7 is communicated with the second pipe 5, and the other end is connected with the dehumidification device 42, so as to guide the high-temperature air to the dehumidification device 42.

During the process of the external air being guided to the nacelle C by the driving device 3, the cooling air, after the primary dehumidification by the first dehumidification system 2 and being mixed with the high-temperature air in the second pipe 5, continuously collides with an inner wall of the isolation bracket 41, resulting in that a resistance is generated, the pressure gradually decreases, the flow velocity gradually increases, and thus the cooling air is pushed into the dehumidification device 42 at a high speed. The isolation bracket 41 may be formed in a parabolic or conical shape, and for the convenience of manufacture, the conical shape is generally selected.

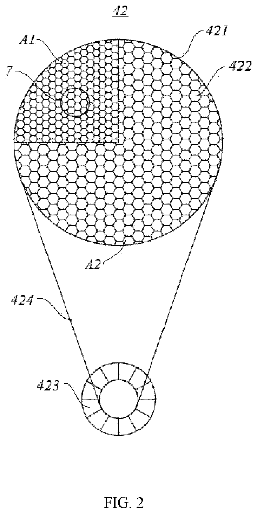

Referring to FIG. 2, the dehumidification device 42 includes a rotatable wheel 421 with an accommodating cavity and moisture absorption particles 422 disposed within the accommodating cavity, the third pipe 7 penetrates through the rotatable wheel 421 to divide the accommodating cavity into a dehumidifying area A1 and a moisture absorption area A2, and the high-temperature air in the third pipe 7 heats the moisture absorption particles 422 in the dehumidifying area A1 to process humid air in the dehumidifying area A1 into dry air.

Further, the dehumidification device 42 further includes a drive motor 423 and a transmission belt 424, the drive motor 423 is disposed within the nacelle C, and the transmission belt 424 is arranged between an output shaft of the drive motor 423 and the rotatable wheel 421 so as to drive the rotatable wheel 421 to rotate relative to the isolation bracket 41.

As shown in FIG. 2, the accommodating cavity of the rotatable wheel 421 is divided into the dehumidifying area A1 and the moisture absorption area A2, wherein the dehumidifying area A1 accounts for about 1/4 while the moisture absorption area A2 accounts for about 3/4, and when the humid air in the nacelle C passes through the moisture absorption area A2, the moisture in the air will be absorbed by the moisture absorption particles 422 and the humid air becomes dry air. The rotatable wheel 421 is driven to rotate by the transmission belt 424 driven by the drive motor 423, and the high-temperature air in the third pipe 7 heats the moisture absorption particles 422 in the dehumidifying area A1, taking away the moisture attached to the moisture absorption particles 422. At this time, the moisture absorption particles 422 in the dehumidifying area A1 become dry particles with adsorption capacity, and the rotatable wheel 421 keeps rotating under the driving of the drive motor 423 and the transmission belt 424, so as to constantly dehumidify the moisture attached to the moisture absorption particles 422. During the process of processing the humid air in the dehumidifying area A1 into the dry air, the small amount of salt in the humid air precipitates out salt crystals in a crystallization form and the salt crystals are filtered and removed by a filter element F at the air inlet In of the generator M, thereby further improving the desalination and dehumidification effect to the external cooling air.

The cooling air dehumidified by the second dehumidification system 4 can directly cool the heat-generating components in the nacelle C, it enters an interior of the generator M after passing through the filter element F at the air inlet In of the generator M (the filter element F is used to remove the remaining dust, salt and other impurities in the air), then absorbs heat of a stator winding, a stator core, a magnetic steel and other heat-generating components, and finally enters the second pipe 5 through the air outlet O, wherein part of the high-temperature air enters the first pipe 1 and continuously cycle in the next air cooling circulation, while the other part of the high-temperature air is discharged out of the nacelle C.

Optionally, the second dehumidification system 4 further includes a second regulating valve 43, and the second regulating valve 43 is disposed at an intersection of the third pipe 7 and the second pipe 5 to adjust a flow of the high-temperature air entering the third pipe 7 from the second pipe 5, so that the air after a secondary dehumidification through the second dehumidification system 4 has a predetermined temperature and a predetermined relative humidity.

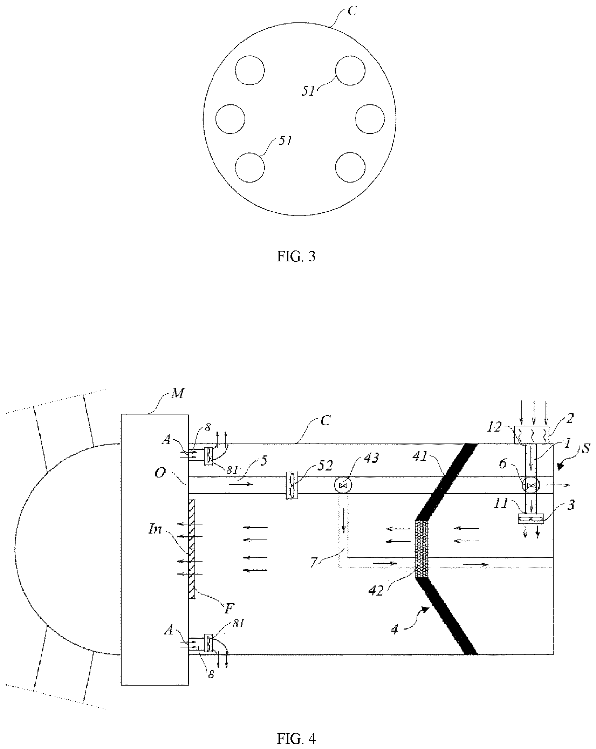

Referring to FIG. 3, in order to improve the cooling effect to the generator M, a subsystem S of the air cooling system further includes a plurality of sub-pipes 51 disposed in the nacelle C and in communication with the outside, and the plurality of sub-pipes 51 are disposed at a portion downstream of the second dehumidification system 4 and is communicated with the second pipe 5 to discharge the high-temperature air generated by the generator M out of the nacelle C through the plurality of sub-pipes 51.

Since there may be deviations in the manufacturing process of the generator M, which affects the distribution of the cooling air of the air cooling system in the generator M, in order to maintain uniformity of a temperature of the generator M in a circumferential direction, the plurality of sub-pipes 51 are evenly distributed in a circumferential direction in the nacelle C.

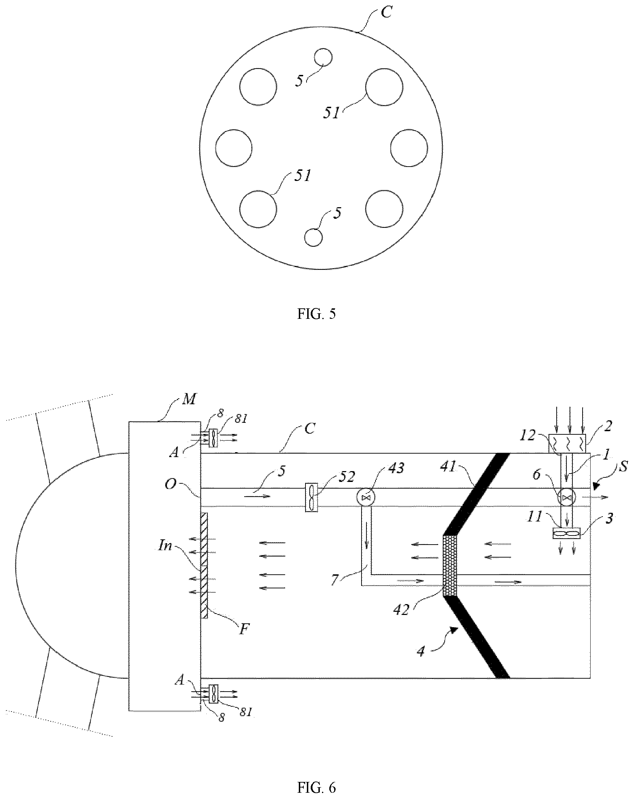

Please combining FIG. 4 with FIG. 5, the embodiments of the present application further provide an air cooling system, which is similar in structure to the air cooling system shown in FIG. 1, except that the generator M is further provided with an auxiliary air outlet A, and that the air cooling system further includes a fourth pipe 8, one end of which is connected to the auxiliary air outlet A, and the other end is communicated with the outside.

Further, the fourth pipe 8 is provided with a second circulation fan 81 to improve the exhaust efficiency of the fourth pipe 8.

The function of the auxiliary air outlet A is to divide the high-temperature air discharged from the air outlet of the generator M into two branches: in one branch, a part of the high-temperature air is mixed with humid and cold air in the first pipe 1 through the second pipe 5, and the other part is discharged out of the nacelle C; in the other branch, the high-temperature air is discharged out of the nacelle C through the fourth pipe 8. Compared with the air cooling system shown in FIG. 1, the exhaust resistance of the second pipe 5 can be reduced, the power of the second driving device 52 can be reduced, and meanwhile, the complexity of the air cooling system can be reduced.

Optionally, as shown in FIG. 5, the auxiliary air outlet A of the generator M is disposed corresponding an interior of the nacelle C; the subsystem S further includes a plurality of sub-pipes 51 disposed in the nacelle C and in communication with the outside, and the plurality of sub-pipes 51 are communicated with the fourth pipe 8, to discharge the high-temperature air generated by the generator M out of the nacelle C through the plurality of sub-pipes 51.

Since there may be deviations in the manufacturing process of the generator M, which affects the distribution of the cooling air of the air cooling system in the generator M, in order to maintain uniformity of a temperature of the generator M in a circumferential direction, the plurality of sub-pipes 51 are evenly distributed in a circumferential direction in the nacelle C.

Referring to FIG. 6, embodiments of the present application further provide an air cooling system, which is similar in structure to the air cooling system as shown in FIG. 4, except that the auxiliary air outlet A of the generator M is disposed outside the nacelle C, and a plurality of sub-pipes 51 are omitted to reduce the occupied space of the nacelle C, with more compact and simple layout and also a lower manufacturing cost.

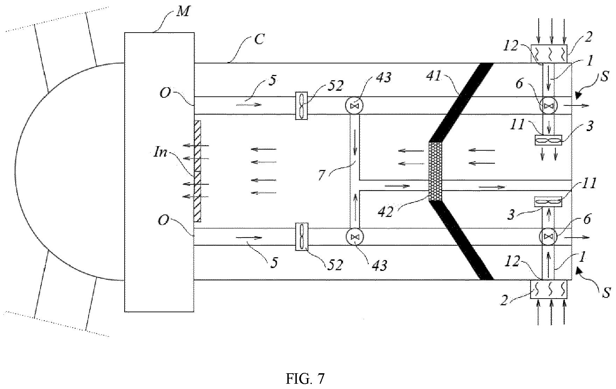

Referring to FIG. 7, embodiments of the present application further provide an air cooling system, which is similar in structure to the air cooling system as shown in FIG. 1, FIG. 4 and FIG. 6, except that the air cooling system includes two or more subsystems S that operate independently of each other, the subsystems S can be the same in structure, which saves complicated arrangement and simplifies the entire air cooling system.

Specifically, one single subsystem S includes at least a first pipe 1, a first dehumidification system 2, a driving device 3 and a second pipe 5, and the first pipes 1 and the driving devices 3 of the two or more subsystems S are located in the first cavity C1.

Optionally, the two or more subsystems S are started at the same time, and after the primary dehumidification by the first dehumidification systems 2 of the two or more subsystems S, the external cooling air is mixed with part of the high-temperature air discharged from the generator M; the mixed air converges into the first cavity C1 of the nacelle C, and after the secondary dehumidification by the second dehumidification systems 4, flows through the heat-generating components in the second cavity C2 and/or the generator M and discharges out, so as to achieve at least one of the cooling, dehumidification and desalination of the wind turbine generator. When one of the subsystems S fails, the operation of the other subsystem S will not be affected, thereby improving the fault tolerance of the air cooling system.

Further, when an ambient temperature outside the nacelle C is lower than a predetermined temperature, for example, when the wind turbine generator operates in a cold area in winter, the first dehumidification system 2 of the nacelle C usually freezes due to the external cooling air in a humid, low-temperature environment, blocking the passage to the nacelle C, and thus a deicing operation is further required.

Optionally, the driving devices 3 of the two or more subsystems S operates alternately for a predetermined time period respectively, so as to achieve the deicing of the first dehumidification systems 2.

The working principle of the deicing operation is as follows: when the driving device 3 of a first subsystem S is operating, the pressure in the nacelle C increases; since the driving devices 3 of the remaining subsystems S are not activated, the air with high pressure will diffuse outward through the inactive driving devices 3 and the first pipes 1 of the remaining subsystems S; and since the air temperature in the nacelle C is higher than the ambient temperature of the outside, the first pipes 1 and the first dehumidification systems 2 of the remaining subsystems S can be deiced.

Then, the driving device 3 of the first subsystem S is turned off, and the driving device 3 of a second subsystem S is started. Similarly, when the driving device 3 of the second subsystem S is operating, the pressure in the nacelle C increases, and the air with high pressure will diffuse outward through the inactive driving devices 3 and the first pipes 1 of the remaining subsystems S; since the air temperature in the nacelle C is higher than the ambient temperature of the outside, after operating for a predetermined time period, the first pipes 1 and the first dehumidification systems 2 of the remaining subsystems S can be deiced.

By analogy, the first pipe 1 and the first dehumidification system 2 of each of the two or more subsystems S are deiced. After the deicing operation is completed, the first pipes 1 of the two or more subsystems S can be communicated with the external air.

Therefore, the air cooling system provided by the embodiments of the present application further includes a temperature sensor and a controller (not shown in the figure) electrically connected to the temperature sensor.

Optionally, the temperature sensor is disposed on the wall of the nacelle C for monitoring the ambient temperature outside the nacelle C. When an external ambient temperature monitored by the temperature sensor is lower than a predetermined temperature, the controller controls the driving devices 3 of two or more subsystems S to operate alternately for a predetermined time period respectively, to deice the first dehumidification system 2 of each subsystem S. The predetermined temperature is, for example, 0°C, and the predetermined time period is, for example, 10 minutes to 30 minutes.

Optionally, the second pipes 5 of the two or more subsystems S are integrally formed, so that the number of the second pipes 5 and the first circulation fans 52 can be decreased, the manufacturing cost and the occupied space of the nacelle can be reduced, and the layout can be compact. In this case, the high-temperature gas from the generator M in one single second pipe 5 is joined and mixed with the air in the first pipes 1 of the two or more subsystems S respectively; after being dehumidified and desalted, the external cold air of the two or more subsystems S entering the nacelle C through the first pipes 1 is mixed again, and after the secondary dehumidification, enters the nacelle C and the generator M to cool the heat-generating components in the nacelle C and/or the generator M.

Since there may be deviations in the manufacturing process of the generator M, the distribution of the cooling air of the air cooling system in the generator M may be affected; in order to maintain uniformity of a temperature of the generator M in a circumferential direction, in an example that the air cooling system includes two subsystems S that operates independently of each other, a plurality of sub-pipes 51 of the two subsystems S are alternately distributed in the nacelle C in a circumferential direction. For example, a first subsystem S includes three sub-pipes 51 disposed in the nacelle C and in communication with the outside, a second subsystem S includes three sub-pipes 51 disposed in the nacelle C and in communication with the outside, and the six sub-pipes 51 of the two subsystems S are alternately distributed in the circumferential direction in the nacelle C, thereby maintaining the uniform stability of the heat dissipation of the generator M and improving the operation reliability of the generator M.

Optionally, the generator M provided in the embodiment of the present application is further provided with an auxiliary air outlet A, the auxiliary air outlet A of the generator M is disposed inside the nacelle C, and the plurality of sub-pipes 51 of each subsystem S is communicated with the fourth pipe 8, so as to discharge the high-temperature air generated by the generator M out of the nacelle C through the plurality of sub-pipes 51.

Optionally, the generator M provided in the embodiment of the present application is further provided with an auxiliary air outlet A, and the auxiliary air outlet A is disposed outside the nacelle C; in this case, the second circulation fan 81 is also disposed outside the nacelle C, thus eliminating the need of the plurality of sub-pipes 51, reducing the occupied space of the nacelle C, making the layout more compact and simple, and meanwhile reducing the manufacturing cost.

It can be understood that the structures of the subsystem S of the air cooling system provided by the embodiments of the present application may be different from each other. For example, one of the subsystems S includes a first pipe 1, a first dehumidification system 2, a driving device 3, a second dehumidification system 4 and a second pipe 5, while another subsystem S includes a first pipe 1, a first dehumidification system 2, a driving device 3, a second pipe 5 and a filter device or other devices to achieve different functions.

Further, the embodiments of the present application further provide a wind turbine generator, which includes: a generator M, a nacelle C connected with the generator M, and any of the above-mentioned air cooling systems, and the air cooling system is arranged between the nacelle C and the air inlet In of the generator M.

As mentioned above, the wind turbine generator is provided with any of the above-mentioned air cooling systems between the nacelle C and the air inlet In of the generator M, the air cooling system includes a first dehumidification system 2 disposed on a wall of a nacelle C and in communication with the nacelle C and a second dehumidification system 4 disposed in the nacelle C, and can solve the dehumidification and cooling issues of the wind turbine generator at the same time, with a simple and compact structure, a small occupied space, and being easy to maintain.

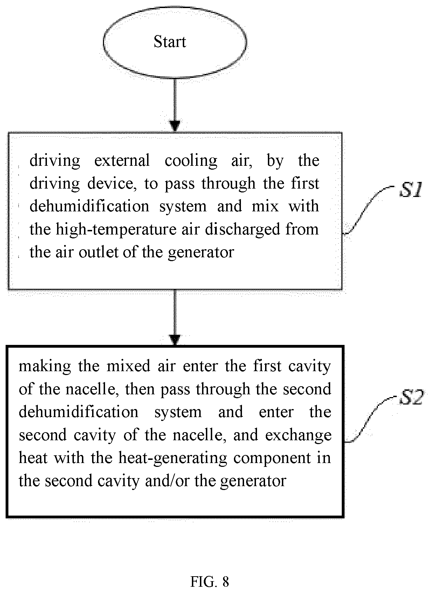

Referring to FIG. 8, an embodiment of the present application further provides a method for cooling the wind turbine generator as described above, and the cooling method includes the following steps:
Step S1: driving external cooling air, by the driving device 3, to pass through the first dehumidification system 2 and then mix with the high-temperature air discharged from the air outlet O of the generator M; and
Step S2: making the mixed air, enter the first cavity C1 of the nacelle C, then pass through the second dehumidification system 4 and enter the second cavity C2 of the nacelle C, and exchange heat with the heat-generating components in the second cavity C2 and/or the generator M.

By performing the dehumidification for two stages on the external cooling air and then performing heat exchange with the heat-generating components in the nacelle C and/or the generator M, the cooling method for the wind turbine generator provided by the embodiment of the present application can solve the dehumidification and cooling issues at the same time.

Further, the cooling method further includes:
Step S3: monitoring whether the ambient temperature outside the nacelle C is lower than a predetermined temperature, where the predetermined temperature is, for example, 0°C. The air cooling system includes N subsystems S that operate independently of each other, where N≧2, and each subsystem S at least includes a first dehumidification system 2 and a driving device 3.
Step S4: If yes, starting the driving device 3 of an i-th subsystem S in the N subsystems S and operating it for a predetermined time period, so as to achieve deicing of the first dehumidification systems 2 of the remaining subsystems S in the N subsystems S, where 1≤i<N;
Step S5: turning off the driving device 3 of the i-th subsystem S, starting the driving device 3 of an (i+1)-th subsystem S and operating it for a predetermined time period, so as to achieve deicing of the first dehumidification systems 2 of the remaining subsystems S in the N subsystems S.
Step S6: If not, starting and operating the driving device 3 of at least one subsystem S in the N subsystems S.

Optionally, two or more subsystems S are started at the same time, and the external cooling air, after primary dehumidification by the first dehumidification systems 2 of the two or more subsystems S, is mixed with part of the high-temperature air discharged from the generator M and converges into the first cavity C1 of the nacelle C, then after the second stage dehumidification by the second dehumidification system 4, flows through the heat-generating components in the second cavity C2 and/or generator M, and is discharged, which greatly improves the cooling effect of the wind turbine generator. When one of the subsystems S fails, the operation of other subsystems S will not be affected, thereby improving the fault tolerance of the air cooling system.

It can be understood that, if the ambient temperature outside the nacelle C is higher than the predetermined temperature, the first dehumidification system 2 does not need to be deiced, and the dehumidification and cooling can be performed directly for the wind power generator.

The person skilled in the art should understand that the above-mentioned embodiments are all illustrative and not restrictive.

The scope of protection sought is defined by the appended claims.

## Claims

1. An air cooling system applied to a wind turbine generator, **characterized in that**, the air cooling system comprises:
a first dehumidification system (2), disposed on a wall of a nacelle (C) of the wind turbine generator and in communication with the nacelle (C);
a second dehumidification system (4), disposed in the nacelle (C) and dividing an interior space of the nacelle (C) into a first cavity (C1) and a second cavity (C2), the second cavity (C2) being communicated with an air outlet (O) of a generator (M) of the wind turbine generator; and
a driving device (3), located in the first cavity (C1),
wherein under the action of the driving device (3), external cooling air passes through the first dehumidification system (2) and then is mixed with high-temperature air discharged from the air outlet (O) of the generator (M), and the mixed air enters the first cavity (C1), passes through the second dehumidification system (4) and then enters the second cavity (C2), and exchanges heat with a heat-generating component in the second cavity (C2) and/or the generator (M), and
wherein the air cooling system comprises two or more subsystems (S) that operate independently of each other, and each of the two or more subsystems (S) is deiced by operating the two or more subsystems (S) alternately for a predetermined time period.

2. The air cooling system according to claim 1, **characterized in that**, a flow of the high-temperature air discharged from the air outlet (O) of the generator (M) is adjusted so that the mixed air in the first cavity (C1) has a predetermined relative humidity.

3. The air cooling system according to claim 1, **characterized in that**, each of the subsystems (S) has the same structure.

4. The air cooling system according to claim 1, **characterized in that**, the air cooling system further comprises:
a first pipe (1), comprising a first end (11) located inside the nacelle (C) and a second end (12) located outside the nacelle (C), wherein the driving device (3) is disposed corresponding to the first end (11) of the first pipe (1), and the first dehumidification system (2) is disposed on the wall of the nacelle (C) corresponding to the second end (12) of the first pipe (1); and
a second pipe (5), one end of which is connected to the air outlet (O) of the generator (M), and the other end of which is extended out of the nacelle (C) to communicate with the external cooling air after intersecting with the first pipe (1), so as to mix a part of the high-temperature air discharged from the air outlet (O) of the generator (M) with the cooling air entering the first pipe (1).

5. The air cooling system according to claim 4, **characterized in that**, each of the subsystems (S) at least comprises: the first pipe (1), the first dehumidification system (2), the driving device (3) and the second pipe (5), and the first pipes (1) and the driving devices (3) of the two or more of the subsystems (S) are located in the first cavity (C1).

6. The air cooling system according to claim 4 or 5, **characterized in that**, the air cooling system further comprises a first regulating valve (6), the first regulating valve (6) is disposed at an intersection of the first pipe (1) and the second pipe (5) to adjust a flow of the high-temperature air entering the first pipe (1) from the second pipe (5).

7. The air cooling system of claim 4 or 5, **characterized in that**, the second dehumidification system (4) comprises:
an isolation bracket (41), connected with the wall of the nacelle (C) and tapering in a direction of an air flow in the first cavity (C1);
a dehumidification device (42), disposed on the isolation bracket (41) and located at a downstream end of the air flow; and
a third pipe (7), one end of which is communicated with the second pipe (5), and the other end is connected with the dehumidification device (42), so as to guide the high-temperature air to the dehumidification device (42).

8. The air cooling system according to claim 7, **characterized in that**, the dehumidification device (42) comprises a rotatable wheel (421) with an accommodating cavity and moisture absorption particles disposed within the accommodating cavity, the third pipe (7) penetrates through the rotatable wheel (421) to divide the accommodating cavity into a dehumidifying area (A1) and a moisture absorption area (A2), and the high-temperature air in the third pipe (7) heats the moisture absorption particles in the dehumidifying area (A1), so as to process humid air in the dehumidifying area (A1) into dry air.

9. The air cooling system according to claim 8, **characterized in that**, the dehumidification device (42) further comprises a drive motor (423) and a transmission belt (424), the drive motor (423) is disposed within the nacelle (C), and the transmission belt (424) is arranged between an output shaft of the drive motor (423) and the rotatable wheel (421) to drive the ratable wheel (421) to rotate relative to the isolation bracket (41).

10. The air cooling system according to claim 7, **characterized in that**, the second dehumidification system (4) further comprises a second regulating valve (43), the second regulating valve (43) is disposed at an intersection of the third pipe (7) and the second pipe (5), to adjust a flow of the high-temperature air entering the third pipe (7) from the second pipe (5).

11. The air cooling system according to claim 1, **characterized in that**, the air cooling system further comprises a plurality of sub-pipes (51) disposed in the nacelle (C) and in communication with the outside, and the plurality of the sub-pipes (51) are communicated with the second pipe (5) so that the high-temperature air generated by the generator (M) is discharged out of the nacelle (C) through the plurality of the sub-pipes (51).

12. The air cooling system according to claim 1, **characterized in that**, the air cooling system further comprises a fourth pipe (8), the generator (M) is further provided with an auxiliary air outlet (A), the auxiliary air outlet (A) is disposed inside or outside the nacelle (C), and one end of the fourth pipe (8) is connected to the auxiliary air outlet (A) while the other end is communicated with the outside.

13. The air cooling system according to claim 12, **characterized in that**, the auxiliary air outlet (A) of the generator (M) is disposed corresponding to an interior of the nacelle (C);
the air cooling system further comprises a plurality of sub-pipes (51) disposed in the nacelle (C) and in communication with the outside, and the plurality of sub-pipes (51) are communicated with the fourth pipe (8), so that the high-temperature air generated by the generator (M) is discharged out of the nacelle (C) through the plurality of the sub-pipes (51).

14. The air cooling system according to claim 4, **characterized in that**, the second pipes (5) of the two or more of the subsystems (S) are provided separately or integrally.

15. The air cooling system according to claim 4 or 5, **characterized in that**, the air cooling system further comprises a temperature sensor and a controller electrically connected with the temperature sensor, and when an external ambient temperature of the outside monitored by the temperature sensor is lower than a predetermined temperature, the controller controls the driving devices (3) of the two or more subsystems (S) to operate for a predetermined time period respectively, so as to deice the first dehumidification system (2) of each subsystem (S).

16. A wind turbine generator, **characterized in that**, comprising:
a generator (M);
a nacelle (C), connected to the generator (M); and
the air cooling system according to any of claims 1 to 15, the air cooling system being arranged between the nacelle (C) and an air inlet (In) of the generator (M).

17. A cooling method for the wind turbine generator according to claim 16, **characterized in that**, the cooling method comprises:
driving external cooling air, by the driving device (3), to pass through the first dehumidification system (2) and mix with the high-temperature air discharged from the air outlet (O) of the generator (M);
making the mixed air enter the first cavity (C1) of the nacelle (C), then pass through the second dehumidification system (4) and enter the second cavity (C2) of the nacelle (C), and exchange heat with the heat-generating component in the second cavity (C2) and/or the generator (M),
wherein the cooling method further comprises: operating the two or more subsystems (S) alternately for a predetermined time period so as to deice each of the two or more subsystems (S).

18. The cooling method of claim 17, **characterized in that**, the cooling method further comprises steps of:
monitoring whether an ambient temperature outside the nacelle (C) is lower than a predetermined temperature, wherein the number of the two or more subsystems is N, N≧2, and each of the subsystems (S) comprises at least the first dehumidification system (2) and the driving device (3);
If yes, starting the driving device (3) of an i-th subsystem (S) in the N subsystems and operating it for a predetermined time period, so as to achieve deicing of the first dehumidification systems (2) of the remaining subsystems (S) in the N subsystems (S), wherein 1≦i<N;
turning off the driving device (3) of the i-th subsystem, starting the driving device (3) of an (i+1)-th subsystem (S) and operating it for a predetermined time period, so as to achieve deicing of the first dehumidification systems (2) of the remaining subsystems (S) in the N subsystems (S); and
If not, starting and operating the driving device (3) of at least one of the N subsystems (S).

## Patentansprüche

1. Luftkühlsystem für einen Windturbinengenerator, **dadurch gekennzeichnet, dass** das Luftkühlsystem aufweist:
ein erstes Entfeuchtungssystem (2), das an einer Wand einer Gondel (C) des Windturbinengenerators angeordnet ist und mit der Gondel (C) in Verbindung steht;
ein zweites Entfeuchtungssystem (4), das in der Gondel (C) angeordnet ist und einen Innenraum der Gondel (C) in einen ersten Hohlraum (C1) und einen zweiten Hohlraum (C2) unterteilt, wobei der zweite Hohlraum (C2) mit einem Luftauslass (O) eines Generators (M) des Windturbinengenerators verbunden ist; und
eine Antriebsvorrichtung (3), die im ersten Hohlraum (C1) angeordnet ist,
wobei unter der Wirkung der Antriebsvorrichtung (3) externe Kühlluft durch das erste Entfeuchtungssystem (2) strömt und dann mit Hochtemperaturluft vermischt wird, die aus dem Luftauslass (O) des Generators (M) abgegeben wird, und die Mischluft in den ersten Hohlraum (C1) eintritt, durch das zweite Entfeuchtungssystem (4) strömt und dann in den zweiten Hohlraum (C2) eintritt und Wärme mit einer wärmeerzeugenden Komponente im zweiten Hohlraum (C2) und/oder dem Generator (M) austauscht, und
wobei das Luftkühlsystem zwei oder mehr Subsysteme (S) aufweist, die unabhängig voneinander in Betrieb sind, und jedes der zwei oder mehr Subsysteme (S) durch abwechselndes Betreiben der zwei oder mehr Subsysteme (S) für eine vorgegebene Zeitdauer enteist wird.

2. Luftkühlsystem nach Anspruch 1, **dadurch gekennzeichnet, dass** ein Strom der aus dem Luftauslass (O) des Generators (M) abgegebenen Hochtemperaturluft so eingestellt wird, dass die Mischluft im ersten Hohlraum (C1) eine vorgegebene relative Luftfeuchtigkeit aufweist.

3. Luftkühlsystem nach Anspruch 1, **dadurch gekennzeichnet, dass** jedes der Subsysteme (S) die gleiche Struktur aufweist.

4. Luftkühlsystem nach Anspruch 1, **dadurch gekennzeichnet, dass** das Luftkühlsystem ferner aufweist:
ein erstes Rohr (1), das ein erstes Ende (11), das innerhalb der Gondel (C) angeordnet ist, und ein zweites Ende (12), das außerhalb der Gondel (C) angeordnet ist, aufweist, wobei die Antriebsvorrichtung (3) entsprechend dem ersten Ende (11) des ersten Rohrs (1) angeordnet ist und das erste Entfeuchtungssystem (2) entsprechend dem zweiten Ende (12) des ersten Rohrs (1) an der Wand der Gondel (C) angeordnet ist; und
ein zweites Rohr (2), dessen eines Ende mit dem Luftauslass (O) des Generators (M) verbunden ist und dessen anderes Ende aus der Gondel (C) herausragt, um nach dem Kreuzen mit dem ersten Rohr (1) mit der externen Kühlluft in Verbindung zu stehen, um einen Teil der aus dem Luftauslass (O) des Generators (M) abgegebenen Hochtemperaturluft mit der in das erste Rohr (1) eintretenden Kühlluft zu mischen.

5. Luftkühlsystem nach Anspruch 4, **dadurch gekennzeichnet, dass** jedes der Subsysteme (S) mindestens aufweist: das erste Rohr (1), das erste Entfeuchtungssystem (2), die Antriebsvorrichtung (3) und das zweite Rohr (5), und wobei sich die ersten Rohre (1) und die Antriebsvorrichtungen (3) der zwei oder mehr Subsysteme (S) in dem ersten Hohlraum (C1) befinden.

6. Luftkühlsystem nach Anspruch 4 oder 5, **dadurch gekennzeichnet, dass** das Luftkühlsystem ferner ein erstes Regelventil (6) aufweist, wobei das erste Regelventil (6) an einer Kreuzung des ersten Rohrs (1) und des zweiten Rohrs (5) angeordnet ist, um einen Strom der Hochtemperaturluft einzustellen, die aus dem zweiten Rohr (5) in das erste Rohr (1) eintritt.

7. Luftkühlsystem nach Anspruch 4 oder 5, **dadurch gekennzeichnet, dass** das zweite Entfeuchtungssystem (4) aufweist:
eine Isolierhalterung (41), die mit der Wand der Gondel (C) verbunden ist und sich in Richtung eines Luftstroms im ersten Hohlraum (C1) verjüngt;
eine Entfeuchtungsvorrichtung (42), die an der Isolierhalterung (41) angebracht ist und sich an einem nachgelagerten Ende des Luftstroms befindet; und
ein drittes Rohr (7), dessen eines Ende mit dem zweiten Rohr (5) verbunden ist und dessen anderes Ende mit der Entfeuchtungsvorrichtung (42) verbunden ist, um die Hochtemperaturluft zur Entfeuchtungsvorrichtung (42) zu leiten.

8. Luftkühlsystem nach Anspruch 7, **dadurch gekennzeichnet, dass** die Entfeuchtungsvorrichtung (42) ein drehbares Rad (421) mit einem Aufnahmehohlraum und Feuchtigkeitsabsorptionspartikeln aufweist, die im Aufnahmehohlraum angeordnet sind, wobei das dritte Rohr (7) durch das drehbare Rad (421) hindurch verläuft, um den Aufnahmehohlraum in einen Entfeuchtungsbereich (A1) und einen Feuchtigkeitsabsorptionsbereich (A2) zu unterteilen, und wobei die Hochtemperaturluft im dritten Rohr (7) die Feuchtigkeitsabsorptionspartikel im Entfeuchtungsbereich (A1) erwärmt, um feuchte Luft im Entfeuchtungsbereich (A1) in trockene Luft umzuwandeln.

9. Luftkühlsystem nach Anspruch 8, **dadurch gekennzeichnet, dass** die Entfeuchtungsvorrichtung (42) ferner einen Antriebsmotor (423) und einen Antriebsriemen (424) aufweist, wobei der Antriebsmotor (423) innerhalb der Gondel (C) angeordnet ist und der Antriebsriemen (424) zwischen einer Ausgangswelle des Antriebsmotors (423) und dem drehbaren Rad (421) angeordnet ist, um das drehbare Rad (421) anzutreiben, sodass es sich relativ zur Isolierhalterung (41) dreht.

10. Luftkühlsystem nach Anspruch 7, **dadurch gekennzeichnet, dass** das zweite Entfeuchtungssystem (4) ferner ein zweites Regelventil (43) aufweist, wobei das zweite Regelventil (43) an einer Kreuzung des dritten Rohrs (7) und des zweiten Rohrs (5) angeordnet ist, um einen Strom der Hochtemperaturluft einzustellen, die aus dem zweiten Rohr (5) in das dritte Rohr (7) eintritt.

11. Luftkühlsystem nach Anspruch 1, **dadurch gekennzeichnet, dass** das Luftkühlsystem ferner mehrere Nebenrohre (51) aufweist, die in der Gondel (C) angeordnet sind und mit der Außenseite in Verbindung stehen, und die mehreren Nebenrohre (51) mit dem zweiten Rohr (5) in Verbindung stehen, so dass die vom Generator (M) erzeugte Hochtemperaturluft durch die Mehrzahl der Nebenrohre (51) aus der Gondel (C) abgegeben wird.

12. Luftkühlsystem nach Anspruch 1, **dadurch gekennzeichnet, dass** das Luftkühlsystem ferner ein viertes Rohr (8) aufweist, der Generator (M) ferner mit einem Hilfsluftauslass (A) versehen ist, der Hilfsluftauslass (A) innerhalb oder außerhalb der Gondel (C) angeordnet ist und ein Ende des vierten Rohrs (8) mit dem Hilfsluftauslass (A) verbunden ist, während das andere Ende mit der Außenseite in Verbindung steht.

13. Luftkühlsystem nach Anspruch 12, **dadurch gekennzeichnet, dass** der Hilfsluftauslass (A) des Generators (M) entsprechend einem Inneren der Gondel (C) angeordnet ist;
das Luftkühlsystem ferner mehrere Nebenrohre (51) aufweist, die in der Gondel (C) angeordnet sind und mit der Außenseite in Verbindung stehen, und die mehreren Nebenrohre (51) mit dem vierten Rohr (8) in Verbindung stehen, so dass die vom Generator (M) erzeugte Hochtemperaturluft durch die mehreren Nebenrohre (51) aus der Gondel (C) abgegeben wird.

14. Luftkühlsystem nach Anspruch 4, **dadurch gekennzeichnet, dass** die zweiten Rohre (5) der zwei oder mehr Subsysteme (S) separat oder integral vorgesehen sind.

15. Luftkühlsystem nach Anspruch 4 oder 5, **dadurch gekennzeichnet, dass** das Luftkühlsystem ferner einen Temperatursensor und einen Regler aufweist, der elektrisch mit dem Temperatursensor verbunden ist, und wenn eine vom Temperatursensor überwachte externe Außenumgebungstemperatur niedriger ist als eine vorbestimmte Temperatur, der Regler die Antriebsvorrichtungen (3) der zwei oder mehr Subsysteme (S) so steuert, dass sie jeweils für eine vorgegebene Zeitdauer in Betrieb sind, um das erste Entfeuchtungssystem (2) jedes Subsystems (S) zu enteisen.

16. Windturbinengenerator, **dadurch gekennzeichnet, dass** er aufweist:
einen Generator (M);
eine Gondel (C), die mit dem Generator (M) verbunden ist; und
das Luftkühlsystem nach einem der Ansprüche 1 bis 15, wobei das Luftkühlsystem zwischen der Gondel (C) und einem Lufteinlass (In) des Generators (M) angeordnet ist.

17. Kühlverfahren für den Windturbinengenerator nach Anspruch 16, **dadurch gekennzeichnet, dass** das Kühlverfahren aufweist:
Antreiben externer Kühlluft durch die Antriebsvorrichtung (3), sodass sie durch das erste Entfeuchtungssystem (2) strömt und sich mit der Hochtemperaturluft vermischt, die aus dem Luftauslass (O) des Generators (M) abgegeben wird;
Veranlassen der Mischluft, in den ersten Hohlraum (C1) der Gondel (C) einzutreten, anschließend das zweite Entfeuchtungssystem (4) zu durchlaufen und in den zweiten Hohlraum (C2) der Gondel (C) einzutreten und mit der wärmeerzeugenden Komponente im zweiten Hohlraum (C2) und/oder dem Generator (M) Wärme auszutauschen,
wobei das Kühlverfahren ferner aufweist: Abwechselndes Betreiben der zwei oder mehr Subsysteme (S) für eine vorgegebene Zeitdauer, um jedes der zwei oder mehr Subsysteme (S) zu enteisen.

18. Kühlverfahren nach Anspruch 17, **dadurch gekennzeichnet, dass** das Kühlverfahren ferner aufweist:
Überwachen, ob eine Umgebungstemperatur außerhalb der Gondel (C) niedriger als eine vorgegebene Temperatur ist, wobei die Anzahl der zwei oder mehr Subsysteme N ist, wobei N ≥ 2 ist, und jedes der Subsysteme (S) mindestens das erste Entfeuchtungssystem (2) und die Antriebsvorrichtung (3) aufweist;
Wenn dies der Fall ist, Starten der Antriebsvorrichtung (3) eines i-ten Subsystems (S) in den N Subsystemen und Betreiben desselben für eine vorgegebene Zeitdauer, um eine Enteisung der ersten Entfeuchtungssysteme (2) der verbleibenden Subsysteme (S) in den N Subsystemen (S) zu erreichen, wobei 1 ≤ i < N;
Ausschalten der Antriebsvorrichtung (3) des i-ten Subsystems, Starten der Antriebsvorrichtung (3) eines (i+1)-ten Subsystems (S) und Betreiben derselben für eine vorgegebene Zeitdauer, um eine Enteisung der ersten Entfeuchtungssysteme (2) der verbleibenden Subsysteme (S) in den N Subsystemen (S) zu erreichen; und
Wenn dies nicht der Fall ist, Starten und Betreiben der Antriebsvorrichtung (3) mindestens eines der N Subsysteme (S).

## Revendications

1. Système de refroidissement d'air mis en œuvre sur une génératrice d'éolienne, **caractérisé en ce que** le système de refroidissement d'air comprend :
un premier système de déshumidification (2), disposé sur une paroi d'une nacelle (C) de la génératrice d'éolienne et en communication avec la nacelle (C) ;
un second système de déshumidification (4), disposé dans la nacelle (C) et divisant un espace intérieur de la nacelle (C) en une première cavité (C1) et une seconde cavité (C2), la seconde cavité (C2) étant mise en communication avec une sortie d'air (O) d'une génératrice (M) de la génératrice d'éolienne ; et
un dispositif d'entraînement (3), situé dans la première cavité (C1),
dans lequel, sous l'action du dispositif d'entraînement (3), de l'air de refroidissement externe passe à travers le premier système de déshumidification (2) et puis est mélangé avec de l'air à haute température évacué de la sortie d'air (O) de la génératrice (M), et l'air mélangé entre dans la première cavité (C1), passe à travers le second système de déshumidification (4) et puis entre dans la seconde cavité (C2), et échange de la chaleur avec un composant générateur de chaleur dans la seconde cavité (C2) et/ou la génératrice (M), et
dans lequel le système de refroidissement d'air comprend deux, ou plus, sous-systèmes (S) qui fonctionnent indépendamment les uns des autres, et chacun des deux, ou plus, sous-systèmes (S) est dégivré en faisant fonctionner les deux, ou plus, sous-systèmes (S) de façon alternée pendant une période prédéterminée.

2. Système de refroidissement d'air selon la revendication 1, **caractérisé en ce qu'**un écoulement de l'air à haute température évacué de la sortie d'air (O) de la génératrice (M) est ajusté de telle sorte que l'air mélangé dans la première cavité (C1) présente une humidité relative prédéterminée.

3. Système de refroidissement d'air selon la revendication 1, **caractérisé en ce que** chacun des sous-systèmes (S) possède la même structure.

4. Système de refroidissement d'air selon la revendication 1, **caractérisé en ce que** le système de refroidissement d'air comprend en outre :
un premier tuyau (1), comprenant une première extrémité (11) située à l'intérieur de la nacelle (C) et une seconde extrémité (12) située à l'extérieur de la nacelle (C), dans lequel le dispositif d'entraînement (3) est disposé de façon correspondant à la première extrémité (11) du premier tuyau (1), et le premier système de déshumidification (2) est disposé sur la paroi de la nacelle (C) de façon correspondant à la seconde extrémité (12) du premier tuyau (1) ; et
un deuxième tuyau (5), dont une extrémité est raccordée à la sortie d'air (O) de la génératrice (M), et dont l'autre extrémité est étendue hors de la nacelle (C) pour communiquer avec l'air de refroidissement externe après l'intersection avec le premier tuyau (1), afin de mélanger une partie de l'air à haute température évacué de la sortie d'air (O) de la génératrice (M) avec l'air de refroidissement entrant dans le premier tuyau (1).

5. Système de refroidissement d'air selon la revendication 4, **caractérisé en ce que** chacun des sous-systèmes (S) comprend au moins : le premier tuyau (1), le premier système de déshumidification (2), le dispositif d'entraînement (3) et le deuxième tuyau (5), et les premiers tuyaux (1) et les dispositifs d'entraînement (3) des deux, ou plus, des sous-systèmes (S) sont situés dans la première cavité (C1).

6. Système de refroidissement d'air selon la revendication 4 ou 5, **caractérisé en ce que** le système de refroidissement d'air comprend en outre une première soupape de régulation (6), la première soupape de régulation (6) est disposée à une intersection du premier tuyau (1) et du deuxième tuyau (5) pour ajuster un écoulement de l'air à haute température entrant dans le premier tuyau (1) depuis le deuxième tuyau (5).

7. Système de refroidissement d'air de la revendication 4 ou 5, **caractérisé en ce que** le second système de déshumidification (4) comprend :
un support d'isolation (41), raccordé à la paroi de la nacelle (C) et s'inclinant dans une direction d'un écoulement d'air dans la première cavité (C1) ;
un dispositif de déshumidification (42), disposé sur le support d'isolation (41) et situé à une extrémité aval de l'écoulement d'air ; et
un troisième tuyau (7), dont une extrémité est mise en communication avec le deuxième tuyau (5), et l'autre extrémité est raccordée au dispositif de déshumidification (42), afin de guider l'air à haute température vers le dispositif de déshumidification (42).

8. Système de refroidissement d'air selon la revendication 7, **caractérisé en ce que** le dispositif de déshumidification (42) comprend une roue rotative (421) avec une cavité de logement et des particules d'absorption d'humidité disposées à l'intérieur de la cavité de logement, le troisième tuyau (7) pénètre à travers la roue rotative (421) pour diviser la cavité de logement en une zone de déshumidification (A1) et une zone d'absorption d'humidité (A2), et l'air à haute température dans le troisième tuyau (7) chauffe les particules d'absorption d'humidité dans la zone de déshumidification (A1), afin de traiter de l'air humide dans la zone de déshumidification (A1) en de l'air sec.

9. Système de refroidissement d'air selon la revendication 8, **caractérisé en ce que** le dispositif de déshumidification (42) comprend en outre un moteur d'entraînement (423) et une courroie de transmission (424), le moteur d'entraînement (423) est disposé à l'intérieur de la nacelle (C), et la courroie de transmission (424) est agencée entre un arbre de sortie du moteur d'entraînement (423) et la roue rotative (421) pour entraîner la roue rotative (421) pour qu'elle entre en rotation relativement au support d'isolation (41).

10. Système de refroidissement d'air selon la revendication 7, **caractérisé en ce que** le second système de déshumidification (4) comprend en outre une seconde soupape de régulation (43), la seconde soupape de régulation (43) est disposée à une intersection du troisième tuyau (7) et du deuxième tuyau (5), pour ajuster un écoulement de l'air à haute température entrant dans le troisième tuyau (7) depuis le deuxième tuyau (5).

11. Système de refroidissement d'air selon la revendication 1, **caractérisé en ce que** le système de refroidissement d'air comprend en outre une pluralité de sous-tuyaux (51) disposés dans la nacelle (C) et en communication avec l'extérieur, et la pluralité des sous-tuyaux (51) sont mis en communication avec le deuxième tuyau (5) de telle sorte que l'air à haute température généré par la génératrice (M) est évacué hors de la nacelle (C) à travers la pluralité des sous-tuyaux (51).

12. Système de refroidissement d'air selon la revendication 1, **caractérisé en ce que** le système de refroidissement d'air comprend en outre un quatrième tuyau (8), la génératrice (M) est en outre pourvue d'une sortie d'air auxiliaire (A), la sortie d'air auxiliaire (A) est disposée à l'intérieur ou à l'extérieur de la nacelle (C), et une extrémité du quatrième tuyau (8) est raccordée à la sortie d'air auxiliaire (A) alors que l'autre extrémité est mise en communication avec l'extérieur.

13. Système de refroidissement d'air selon la revendication 12, **caractérisé en ce que** la sortie d'air auxiliaire (A) de la génératrice (M) est disposée de façon correspondant à un intérieur de la nacelle (C) ; le système de refroidissement d'air comprend en outre une pluralité de sous-tuyaux (51) disposés dans la nacelle (C) et en communication avec l'extérieur, et la pluralité de sous-tuyaux (51) sont mis en communication avec le quatrième tuyau (8), de telle sorte que l'air à haute température généré par la génératrice (M) est évacué hors de la nacelle (C) à travers la pluralité des sous-tuyaux (51).

14. Système de refroidissement d'air selon la revendication 4, **caractérisé en ce que** les deuxièmes tuyaux (5) des deux, ou plus, des sous-systèmes (S) sont prévus séparément ou de façon monobloc.

15. Système de refroidissement d'air selon la revendication 4 ou 5, **caractérisé en ce que** le système de refroidissement d'air comprend en outre un capteur de température et une unité de commande électriquement raccordée au capteur de température, et, lorsqu'une température ambiante externe de l'extérieur surveillée par le capteur de température est inférieure à une température prédéterminée, l'unité de commande commande les dispositifs d'entraînements (3) des deux, ou plus, sous-systèmes (S) pour qu'ils fonctionnent pendant une période prédéterminée respectivement, afin de dégivrer le premier système de déshumidification (2) de chaque sous-système (S).

16. Génératrice d'éolienne, **caractérisée en ce qu'**elle comprend :
une génératrice (M) ;
une nacelle (C), raccordée à la génératrice (M) ; et
le système de refroidissement d'air selon de quelconque des revendications 1 à 15, le système de refroidissement d'air étant agencé entre la nacelle (C) et une entrée d'air (In) de la génératrice (M).

17. Procédé de refroidissement pour la génératrice d'éolienne selon la revendication 16, **caractérisé en ce que** le procédé de refroidissement comprend :
entraîner de l'air de refroidissement externe, par l'intermédiaire du dispositif d'entraînement (3), pour qu'il passe à travers le premier système de déshumidification (2) et se mélange avec l'air à haute température évacué de la sortie d'air (O) de la génératrice (M) ;
faire en sorte que l'air mélangé entre dans la première cavité (C1) de la nacelle (C), puis passe à travers le second système de déshumidification (4) et entre dans la seconde cavité (C2) de la nacelle (C), et échange de la chaleur avec le composant générateur de chaleur dans la seconde cavité (C2) et/ou la génératrice (M),
dans lequel le procédé de refroidissement comprend en outre : faire fonctionner les deux, ou plus, sous-systèmes (S) de façon alternée pendant une période prédéterminée afin de dégivrer chacun des deux, ou plus, sous-systèmes (S).

18. Procédé de refroidissement de la revendication 17, **caractérisé en ce que** le procédé de refroidissement comprend en outre les étapes de :
surveiller si une température ambiante à l'extérieur de la nacelle (C) est inférieure à une température prédéterminée, dans lequel le nombre des deux, ou plus, sous-systèmes est N, N ≥ 2, et chacun des sous-systèmes (S) comprend au moins le premier système de déshumidification (2) et le dispositif d'entraînement (3) ;
dans l'affirmative, démarrer le dispositif d'entraînement (3) d'un i-ième sous-système (S) dans les N sous-systèmes et le faire fonctionner pendant une période prédéterminée, afin d'accomplir le dégivrage des premiers systèmes de déshumidification (2) des sous-systèmes restants (S) dans les N sous-systèmes (S), dans lequel 1 ≤ i < N ;
éteindre le dispositif d'entraînement (3) du i-ième sous-système, démarrer le dispositif d'entraînement (3) d'un (i+1)-ième sous-système (S) et le faire fonctionner pendant une période prédéterminée, afin d'accomplir le dégivrage des premiers systèmes de déshumidification (2) des sous-systèmes restants (S) dans les N sous-systèmes (S) ; et
dans la négative, démarrer et faire fonctionner le dispositif d'entraînement (3) d'au moins un des N sous-systèmes (S).
